# FASCICULE DE BREVET EUROPEEN

(11) **EP 1 451 987 B1**
(45) Date de publication et mention de la délivrance du brevet: **30.03.2005**
(21) Numéro de dépôt: 02803829.7
(22) Date de dépôt: 25.11.2002
(51) Int. Cl.: H04L 12/56

(54) **CONTROLE MULTI-DOMAINE D ADMISSION DE FLUX DE DONNEES ASSOCIES A DES CRITERES DE QUALITE DE SERVICE**
MEHRFACH-DOMAIN-ZUGRIFFSREGELUNG VON DATENFLÜSSEN IN ASSOZIATION MIT DIENSTQUALITÄTSKRITERIEN
MULTIDOMAIN ACCESS CONTROL OF DATA FLOWS ASSOCIATED WITH QUALITY OF SERVICE CRITERIA

(30) Priorité: 29.11.2001 FR 0115430
(43) Date de publication de la demande: 01.09.2004
(73) Titulaire: ALCATEL, 75008 Paris (FR)
(72) Inventeur: COUTURIER, Alban, F-92320 Chatillon (FR)
(74) Mandataire: Chaffraix, Sylvain
(86) Numéro de dépôt international: PCT/FR2002/004028
(87) Numéro de publication internationale: WO 2003/047185

(56) Documents cités:
- US-A- 6 134 589
- US-A1- 2001 012 271
- KRASNODEMBSKI K ET AL: "END-TO-END QOS PROVISIONING ACROSS HETEROGENEOUS DOMAINS" PROCEEDINGS OF THE IEEE CONFERENCE 2000 ON HIGH PERFORMANCE SWITCHING AND ROUTING. HEIDELBERG, GERMANY, JUNE, 26 - 29, 2000, PROCEEDINGS OF THE IEEE CONFERENCE ON HIGH PERFORMANCE SWITCHING AND ROUTING, NEW YORK, NY: IEEE, US, 26 juin 2000 (2000-06-26), pages 333-341, XP001075719 ISBN: 0-7803-5884-8

## Description

La présente invention concerne la gestion de la qualité de service sur un réseau de données. Elle s'applique tout particulièrement aux réseaux de données formés de plusieurs domaines, permettant la fourniture de différents services, comme la transmission de la voix, de données, de vidéo etc. Un tel réseau peut par exemple être un réseau basé sur les protocoles de la famille TCP/IP (Transport Control Protocol / Internet Protocol), c'est-à-dire du type communément appelé Internet.

Certains services nécessitent une réservation expresse de ressources au sein du réseau.
En effet, certains réseaux, tels Internet, ont été prévus pour transmettre des données, mais ni de la voix, ni de la vidéo. Au sein d'Internet, les transmissions se font sous la forme de paquets, chaque paquet étant acheminé indépendamment des autres. Or, par exemple, la transmission de la voix et de la vidéo nécessite de minimiser le taux de perte de paquets, ainsi que le délai de transmission, ceci afin d'assurer un confort d'écoute ou de vision suffisant au destinataire de la transmission.
Cette minimisation de la gigue et du délai se fait classiquement par la réservation de ressources au sein des noeuds de réseau (ou routeurs).

Classiquement, le terminal souhaitant une certaine qualité de service pour un certain flux transmet une requête en qualité de service, avant d'envoyer les paquets correspondants à ce flux.
Dans la suite, on entend par flux, un micro-flux, c'est-à-dire un ensemble de paquets caractérisé classiquement par un 5-tuple : le protocole utilisé, l'adresse et le port de l'émetteur et l'adresse et le port du destinataire.

Généralement, cette requête en qualité de service est une requête en réservation de ressources, par exemple conforme au protocole RSVP (*ReSerVation Protocol*) tel que défini par le RFC (*Request For Comments*) 2205 de l'IETF (*Internet Engineering Task Force*).

Selon ce protocole RSVP, chaque routeur recevant une requête en réservation de ressource doit, dans un premier temps, vérifier qu'il dispose des ressources demandées et acheminer la requête selon les algorithmes de routage classique. La requête en réservation ressources parcoure ainsi le chemin qui sera normalement celui des paquets du flux, jusqu'au destinataire. Celui-ci transmet alors une réponse à l'émetteur initial qui va remonter le chemin. Lors de ce second passage, chaque routeur doit réserver effectivement les ressources demandées.
Ce protocole présente un inconvénient majeur en ce qu'il nécessite pour chaque requête en qualité de service adressée à un réseau, la réservation de ressources sur un ensemble important de routeur, et, en pratique, la maintenance d'un contexte de traitement au sein de chaque routeur.

Cet inconvénient est résolu par l'architecture DiffServ (*Differentiated Services model*) telle que définie par le RFC 2475 de l'IETF (*Internet Engineering Task Force*).

Selon cette architecture, les requêtes en qualité de service sont mises en oeuvre par l'affectation de priorités, appelées dans ce contexte, couleurs, à chaque paquet du flux. Les routeurs recevant des paquets ainsi « colorés » (c'est-à-dire auxquels une priorité a été affectée) doivent les traiter en priorité.
Toutefois, ces deux solutions se complètent, de sorte que les solutions de l'état de la technique peuvent mettre en oeuvre les deux protocoles simultanément, afin de tirer profit de leurs avantages respectifs.

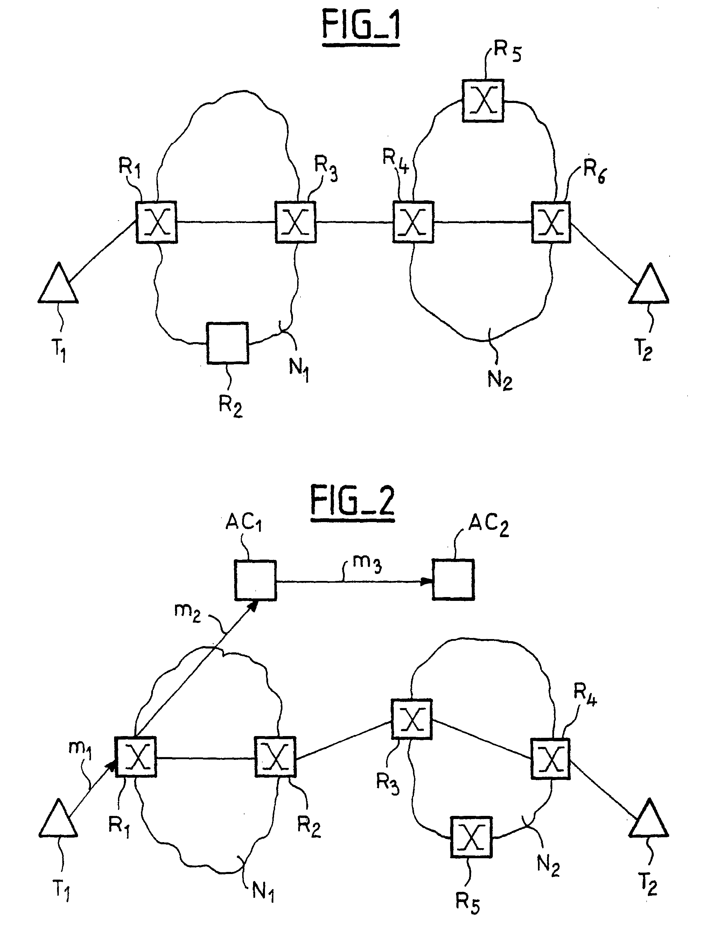

Un exemple de mise en oeuvre d'une telle solution de l'état de la technique est présenté par la figure 1. Un tel état de l'art est par exemple décrit dans le RFC 2998 intitulé « *A Framework for Integrated Services Operation over Diffserv Networks* » et adopté en novembre 2000 par l'IETF.

Un terminal T₁ est connecté à un domaine N₁, comportant des routeurs R₁, R₂ et R₃. Un terminal T₂ est connecté à un domaine N₂ comportant des routeurs R₄, R₅, R₆.
Si le terminal T₁ veut transmettre un flux de données nécessitant une certaine qualité de service, au terminal T₂ (par exemple, une session multimédia qui nécessite un débit minimal), il émet une requête en réservation de ressource selon le protocole RSVP.

Cette requête en réservation de ressources est reçue puis traitée par le routeur R₁. Il vérifie qu'il dispose effectivement des ressources internes suffisantes (c'est-à-dire une valeur de débit en sortie supérieure à un seuil spécifié par la requête en réservation de ressources).
Le cas échéant, la requête en réservation de ressource est transmise au prochain routeur qui pourra la traiter, à la limite du réseau DiffServ. La réponse revient, classiquement, au routeur R₁ qui peut la transmettre alors au terminal T₁, lui indiquant ainsi que la réservation de ressources a été effectivement réalisée.
Le terminal T₁ transmet alors les paquets du flux vers le terminal destinataire T₂.
A leur réception, le routeur R₁ leur affecte une priorité en fonction de la requête en réservation de ressources précédemment reçue.
Comme dit précédemment, cette affectation de priorité est classiquement conforme à l'architecture DiffServ.

Les paquets prioritaires sont alors acheminés au sein du domaine N₁ puis du domaine N₂, en passant par les routeurs R₁, R₃, R₄ et R₆. Chacun de ces routeurs traite les paquets en fonction des priorités qui leur sont affectés.

Cette solution de l'état de l'art présente un problème majeur puisque la vérification des ressources disponibles n'est effectuée que par le premier routeur R₁. Aussi, si deux requêtes en qualité de service sont initiées sur deux routeurs frontières distincts, par exemple sur les routeurs R₁ et R₂ ou bien R₁ et R₅, il peut en résulter qu'une impossibilité de satisfaire cette qualité de service par un autre routeur ne puisse pas être détectée. Les deux requêtes en qualité de service seront alors accordées alors qu'une des deux, ou même les deux, ne pourront être satisfaites.

Un autre example est décrit dans le document XP001075719.

Le but de l'invention est de résoudre ce problème, notamment dans le cas où plusieurs domaines sont concernés.
Pour ce faire l'invention propose de déporter la fonction de vérification des ressources disponibles à un unique dispositif appelé contrôleur d'admission.
Plus précisément, l'invention a pour objet un contrôleur d'admission à un domaine d'un réseau de données, ce domaine possédant un ensemble de routeurs. Le contrôleur d'admission se caractérise en ce qu'il possède :
- Des moyens de réception pour recevoir une requête en qualité de service, contenant des informations relatives au point d'entrée du flux de paquets associé à cette requête en qualité de service dans le domaine,
- Des moyens de détermination d'un point de sortie correspondant à la requête en qualité de service,
- Des moyens de transmission d'une requête en qualité de service modifiée, au contrôleur d'admission associé au domaine de sortie correspondant au point de sortie, en y insérant des informations relatives au point d'entrée du flux de paquets dans le domaine de sortie.

Selon une mise en oeuvre de l'invention, le contrôleur d'admission comporte en outre des moyens de vérification pour déterminer si la requête en qualité de service peut être satisfaite par le domaine.
Cette détermination peut par exemple se faire en fonction de connaissances des ressources utilisées dans le domaine, ou selon une heuristique macroscopique.

En centralisant toutes les requêtes en qualité de service adressées à un domaine, auprès d'un unique contrôleur d'admission, celui-ci est à même de connaître l'utilisation qui est faite des ressources du domaine, et donc d'accorder ou non les requêtes en qualité de services sans générer les problèmes de l'état de la technique évoqués précédemment.
Les contrôleurs d'admission des différents domaines peuvent s'échanger des informations sur les requêtes en qualité de service. Notamment, ils se transmettent des informations relatives au point d'entrée des flux de paquets associés aux requêtes en qualité de service, afin de pouvoir déterminer l'acheminement de ces flux de données.

L'invention et ses avantages apparaîtront de façon plus claire dans la description qui va suivre en liaison avec les figures annexées.
La figure 1, déjà commentée, représente l'état de la technique, en matière de contrôle d'admission dans un réseau formé de plusieurs domaines.
La figure 2 illustre une mise en oeuvre de l'invention, utilisant des contrôleurs d'admission centralisés.

Sur l'exemple de la figure 2, le terminal T₁ veut initier une session multimédia avec le terminal T₂. Le terminal T₁ est attaché à un domaine N₁ et le terminal T₂ à un domaine N₂.
La session multimédia nécessite une certaine qualité de service. Le terminal T₁ transmet donc une requête en qualité de service m₁ au routeur R₁ auquel il est attaché.
Cette requête en qualité de service m₁ est typiquement conforme au protocole RSVP.
Il est toutefois important de noter que l'invention peut également être mise en oeuvre dans le cadre d'un réseau purement « DiffServ ».

Selon l'invention, ce routeur (ou tout autre équipement) R₁ intercepte cette requête en qualité de service et la transmet au contrôleur d'admission AC₁ sous la forme d'un message m₂. Cette requête en qualité de service m₂ peut par exemple être conforme au protocole COPS, tel que défini par le RFC 2748 intitulé « *The COPS* (*Common Open Policy Service*), adopté par l'IETF en janvier 2000.
Le routeur R₁ peut y insérer des informations le caractérisant, c'est-à-dire par exemple, son adresse IP (*Internet Protocol*), mais dans le cas général, le contrôleur d'admission AC₁ dispose de la connaissance suffisante pour associer lui-même ces informations à la requête en qualité de service.

Le contrôleur d'admission AC₁ est associé au domaine N₁.
Il dispose de moyens de réception pour recevoir cette requête en qualité de service m₂ et pour prendre connaissance des informations relatives au point d'entrée du flux de paquets associé à la requête en qualité de service, dans le domaine N₁. Il peut ainsi savoir que ce flux de données est arrivé au routeur R₁.

Le contrôleur d'admission AC₁ dispose de moyens de détermination d'un point de sortie du flux de paquets correspondant à cette requête en qualité de service.
Ces moyens de détermination peuvent comprendre la connaissance des ressources internes du domaine N₁, et plus particulièrement la topologie des routeurs le composant.
Connaissant cette topologie ainsi que le point d'entrée de la requête en qualité de service, le contrôleur d'admission AC₁ peut déterminer le point de sortie correspondant. Pour se faire, il peut simplement appliquer une détermination du chemin en recherchant, routeur par routeur, le prochain routeur. Ce peut se faire en résolvant l'adresse IP (*Internet Protocol*) destination du flux de paquets avec les tables de routage des routeurs qu'il aura récupéré avec la topologie du réseau. Il peut aussi déterminer la sortie en connaissant toutes les informations de routage BGP (*Border Gateway Protocol*) qui circulent entre les routeurs de bord (*Border routeurs*) du domaine.
Dans le cas d'un réseau configuré pour représenter des tuyaux de bord à bord, par exemple de type MPLS (*Multi-Protocol Label Switching*), seule la connaissance du tuyau (ou *Label Switch Path*, selon la terminologie propre au mécanisme MPLS) est nécessaire pour déterminer la sortie. Pour ce faire, le contrôleur d'admission doit connaître la table de routage et les règles de détermination du tuyau dans le routeur.

Connaissant ce point de sortie, il peut déterminer d'une part le domaine de sortie, et d'autre part, le point d'entrée dans ce domaine de sortie. Dans l'exemple de la figure 2, le domaine de sortie est le domaine N₂ et le point d'entrée appartient au routeur R₄.

Le point d'entrée dans le domaine de sortie est caractérisé par l'identificateur du routeur d'entrée, R₃ (par exemple, son adresse IP). Selon l'architecture de qualité de service (QoS) employée, il peut être caractérisé, en plus de l'identificateur du routeur, par une information de niveau 1 ou 2 au sens du modèle OSI (*Open Systems Interconnection*), par exemple un identificateur de carte physique, du circuit virtuel ATM, une étiquette (ou « *Label* ») MPLS (*Multi-Protocol Label Switching*), etc.
Ces informations relatives au point d'entrée dans le domaine de sortie sont insérées dans une requête en qualité de service modifiée m₃ transmise au contrôleur d'admission AC₂ associé au domaine de sortie N₂.

Le contrôleur d'admission AC₂ reçoit donc une requête en qualité de service m₃ comportant le point d'entrée dans son domaine. Il peut donc déterminer son point de sortie.

Dans le cas où le flux de données véhiculant la session multimédia devrait traverser un plus grand nombre de domaines, la requête en qualité de service serait ainsi transmise de contrôleur d'admission en contrôleur d'admission.

Selon une mise en oeuvre de l'invention, les contrôleurs d'admission (ou une partie d'entre eux) peuvent comporter en outre des moyens de vérification pour déterminer si la requête en qualité de service peut être satisfaite par son domaine associé.
Selon un premier mode de réalisation, cette détermination peut se faire en fonction de connaissances des ressources utilisées dans le domaine. Ces ressources internes peuvent être fournies par un système de gestion de réseau. Elles peuvent notamment comporter les bandes passantes des connexions (ou d'une partie des connexions) entre les routeurs constitutifs du domaine.
Selon un second mode de réalisation, cette détermination peut être faite selon une heuristique macroscopique. Cette heuristique peut simplement consister à considérer que le domaine peut satisfaire un nombre prédéfini de requêtes en qualité de service. La détermination consiste alors à simplement compter le nombre de requêtes en qualité de service reçus (en encore en vigueur) et à vérifier que ce nombre demeure inférieur au nombre préalablement défini.

Si un contrôleur d'admission détermine que la requête en qualité de service ne peut pas être satisfaite, il peut stopper sa propagation vers le contrôleur d'admission suivant : en effet, pour que la qualité de service désiré soit atteinte, il est nécessaire que tous les domaines traversés puissent satisfaire la requête en qualité de service.
Il peut alors adresser un message de réponse au contrôleur d'admission qui lui a transmis la requête en qualité de service pour lui signifier la non-satisfaction de la requête en qualité de service.
Ce dernier peut alors choisir un autre domaine pour parvenir à acheminer le flux de paquets jusqu'au destinataire.

Dans le cas où tous les contrôleurs d'admission de la chaîne décident que leur domaine correspondant peut satisfaire la requête en qualité de service, le dernier de la chaîne transmet au contrôleur d'admission précédent, un message de réponse signifiant la satisfaction de cette requête en qualité de service.
Ce message de réponse est propagé dans le sens opposé à la requête en qualité de service, jusqu'au premier contrôleur d'admission, puis jusqu'au routeur sur lequel est arrivée cette requête en qualité de service.
Ce routeur a alors l'assurance que la qualité de service demandé par le terminal peut être satisfaite jusqu'au terminal destinataire (ou aux terminaux destinataires). Il peut alors autoriser la transmission du flux de données correspondant à la session multimédia.

## Revendications

1. Contrôleur d'admission (AC₁, AC₂) à un domaine (N₁, N₂) d'un réseau de données, ledit domaine possédant un ensemble de routeurs (R₁, R₂... R₅), **caractérisé en ce qu'**il possède :
• Des moyens de réception pour recevoir toutes requêtes en qualité de service (m₂) visant ledit domaine, chaque requête en qualité de service contenant des informations relatives au point d'entrée du flux de paquets associé à ladite requête en qualité de service dans ledit domaine,
• Des moyens de détermination d'un point de sortie correspondant à ladite requête en qualité de service,
• Des moyens de transmission d'une requête en qualité de service modifiée (m₃), au contrôleur d'admission associé au domaine de sortie correspondant audit point de sortie, en y insérant des informations relatives au point d'entrée dudit flux de paquets dans ledit domaine de sortie.

2. Contrôleur d'admission selon la revendication 1, comportant en outre des moyens de vérification pour déterminer si ladite requête en qualité de service peut être satisfaite par ledit domaine.

3. Contrôleur d'admission selon la revendication précédente, dans lequel ladite détermination se fait en fonction de connaissances des ressources utilisées dans ledit domaine.

4. Contrôleur d'admission selon la revendication 2, dans lequel ladite détermination est faite selon une heuristique macroscopique.

## Claims

1. An admission controller (AC₁, AC₂) for controlling admission to a domain (N₁, N₂) of a data network, said domain having a set of routers (R₁, R₂ ... R₅), which controller is **characterised in that** it has:
• receiver means for receiving all quality of service requests (m₂) relating to said domain, each quality of service request containing information relating to the entry point of the flow of packets associated with said quality of service request into said domain,
• determination means for determining an exit point corresponding to said quality of service request, and
• transmission means for transmitting a modified quality of service request (m₃) to the admission controller associated with the exit domain corresponding to said exit point, inserting therein information relating to the entry point of said flow of packets into said exit domain.

2. An admission controller according to claim 1, further comprising verification means for determining if said quality of service request can be satisfied by said domain.

3. An admission controller according to the preceding claim, wherein said determination is effected as a function of a knowledge of the resources used in said domain.

4. An admission controller according to claim 2, wherein said determination is effected in accordance with a macroscopic heuristic.

## Patentansprüche

1. Zugangs-Controller (AC₁, AC₂) zu einer Domain (N₁, N₂) eines Datennetzes, wobei diese Domain eine Gruppe von Routern (R₁, R_{2,} ... R₅) besitzt, **dadurch gekennzeichnet, dass** er besitzt:
• Empfangsvorrichtungen, um alle für diese Domain bestimmten Dienstgüte-Anforderungen (m₂) zu empfangen, wobei jede Dienstgüte-Anforderung Informationen über den Eintrittspunkt des mit dieser Dienstgüte-Anforderung verbundenen Paketflusses in die Domain enthält;
• Vorrichtungen zur Bestimmung eines Austrittspunkts, welcher dieser Dienstgüte-Anforderung entspricht;
• Vorrichtungen zur Übertragung einer modifizierten Dienstgüte-Anforderung (m₃) an den Zugangs-Controller, welcher der zum Austrittspunkt gehörenden Austritts-Domain zugeordnet ist, indem darin Informationen über den Eintrittspunkt des Paketflusses in die Austritts-Domain eingefügt werden.

2. Zugangs-Controller nach Anspruch 1, außerdem umfassend Überprüfungsvorrichtungen, um festzustellen, ob die Dienstgüte-Anforderung von der Domain erfüllt werden kann.

3. Zugangs-Controller nach dem vorhergehenden Anspruch, bei dem diese Feststellung in Abhängigkeit von Kenntnissen der in der Domain verwendeten Ressourcen durchgeführt wird.

4. Zugangs-Controller nach dem Anspruch 2, bei dem diese Feststellung nach einer makroskopischen Heuristik durchgeführt wird.
